# DEMANDE DE BREVET EUROPEEN

(11) **EP 2 910 102 A1**
(43) Date de publication de la demande: **26.08.2015**
(21) Numéro de dépôt: 15305282.4
(22) Date de dépôt: 24.02.2015
(51) Int. Cl.: A01D 46/20

(54) **Dispositif pour la cueillette de fruits**

(30) Priorité: 25.02.2014 FR 1451484
(71) Demandeur: Cantet, 79240 Vernoux-en-Gatine (FR)
(72) Inventeur: Cantet, Philippe, 79240 VERNOUX-EN-GATINE (FR)
(74) Mandataire: Fantin, Laurent

(57) **Abrégé**

L'invention se rapporte à un dispositif pour la cueillette de fruits comprenant un châssis (14) mobile selon une direction de déplacement, une rampe (22) supporté par le châssis (14) et qui comprend un plan incliné (PI) sur lequel des conteneurs (24) sont alignés selon la direction de déplacement, une série de paliers située d'un côté de ladite rampe (22) et une série de paliers située de l'autre côté de ladite rampe (22). Ce dispositif se caractérise en ce que le plan incliné (PI) est proche du sol à l'avant du dispositif et distant du sol à l'arrière du dispositif, et en ce que la rampe (22) comprend des moyens pour immobiliser les conteneurs (24) selon des positions stables (P1 à P3) et des moyens pour déplacer les conteneurs (24) d'une position stable à l'autre en remontant le plan incliné (PI).

## Description

La présente invention se rapporte à un dispositif pour la cueillette de fruits tels que des pommes par exemple.

D'après le document FR-2.850.240, on connait un dispositif pour la récolte des fruits qui comprend un châssis mobile supportant en position médiane un convoyeur à bande incliné qui s'étend en montant de l'avant vers l'arrière. Ce convoyeur montant est prolongé à l'arrière du dispositif par un convoyeur vertical pour déverser les fruits dans un conteneur. Le châssis mobile supporte également des plateformes horizontales, deux de chaque côté du convoyeur, mobiles en hauteur indépendamment les unes des autres. Chaque plateforme est indépendante et comprend un garde-corps qui s'étend sur toute sa périphérie pour empêcher la chute des cueilleurs.

Lors de son utilisation, le dispositif circule entre les rangs des arbres. Les cueilleurs positionnés sur les plateformes récoltent les fruits et les déposent sur le convoyeur incliné. Le dispositif décrit dans le document FR-2.850.240 ne donne pas satisfaction pour les raisons suivantes :

A l'arrière du dispositif, les pommes s'abiment en tombant d'une trop grande hauteur dans le conteneur.

Selon un autre inconvénient, les cueilleurs ne peuvent pas circuler d'une plateforme à l'autre, ce qui tend à réduire la productivité. En effet, la quantité de fruits étant disparate d'une zone à l'autre, un cueilleur positionné sur une plateforme peut être surchargé alors que les autres cueilleurs positionnés sur les autres plateformes n'ont aucun fruit à ramasser et ne peuvent pas venir l'aider.

On connait également d'après le document SU-1091879 un dispositif pour la récolte de fruits qui comprend un châssis mobile qui comprend en position médiane un convoyeur qui supporte des conteneurs, ledit convoyeur étant incliné et descendant vers l'arrière du dispositif. Ce dispositif comprend de part et d'autre du convoyeur des marches. Selon ce document, les conteneurs sont solidarisés au convoyeur et se translatent vers le bas et l'arrière du dispositif.

Le dispositif décrit dans SU-1091879 ne donne pas satisfaction pour les raisons suivantes : Selon un premier inconvénient, ce dispositif ne respecte pas les normes de sécurité, les marches étant trop courtes et sans garde-corps.

Selon un autre inconvénient, les cueilleurs ne peuvent pas se déplacer d'un côté à l'autre du convoyeur. Par conséquent, si les cueilleurs situés d'un côté du dispositif sont surchargés, les cueilleurs situés de l'autre côté du convoyeur ne peuvent pas venir les aider s'ils n'ont aucun fruits à cueillir. Enfin, la partie haute du dispositif étant située à l'avant, les fruits situés en partie basse des arbres peuvent être endommagés par le dispositif avant d'être cueillis.

L'invention vise à remédier aux inconvénients de l'art antérieur.

A cet effet, l'invention a pour objet un dispositif pour la cueillette de fruits comprenant un châssis mobile selon une direction de déplacement, une rampe supporté par le châssis et qui comprend un plan incliné sur lequel des conteneurs sont alignés selon la direction de déplacement, une série de paliers située d'un côté de ladite rampe et une série de paliers située de l'autre côté de ladite rampe. Ce dispositif se caractérise en ce que le plan incliné est proche du sol à l'avant du dispositif et distant du sol à l'arrière du dispositif et en ce que la rampe comprend des moyens pour immobiliser les conteneurs selon des positions stables et des moyens pour déplacer les conteneurs d'une position stable à l'autre en remontant le plan incliné.

D'autres caractéristiques et avantages ressortiront de la description qui va suivre de l'invention, description donnée à titre d'exemple uniquement, en regard des dessins annexés sur lesquels :
- la figure 1 est une vue de côté d'un dispositif pour la cueillette de fruits qui illustre l'invention,
- la figure 2 est une vue en perspective depuis l'avant du dispositif illustré sur la figure 1, avec d'un côté une série de paliers en position rétractée et de l'autre côté une série de paliers en position déployée,
- la figure 3 est une vue en perspective depuis l'arrière du dispositif illustré sur la figure 1,
- les figures 4A à 4C sont des vues en perspective d'une rampe de conteneurs selon l'invention qui illustrent les différents états de ladite rampe,
- les figures 5A à 5C sont des représentations schématiques de dessus d'un chariot utilisé pour déplacer des conteneurs qui illustrent les différents états dudit chariot,
- les figures 6A et 6B sont des représentations schématiques de côté d'un taquet rétractable selon l'invention respectivement en position déployée et en position escamotée.

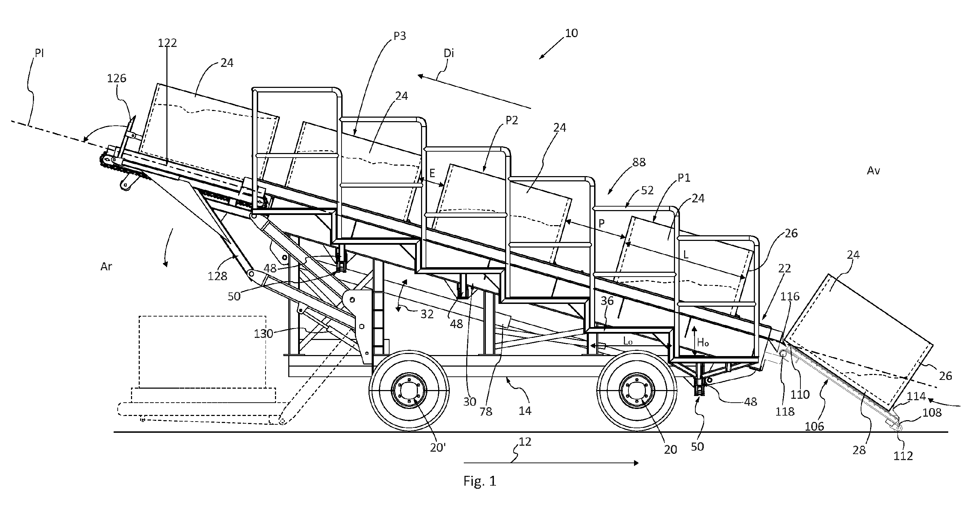

Sur la figure 1, on a représenté un dispositif 10 pour la cueillette des fruits configuré pour se déplacer entre des rangs d'arbres fruitiers, selon une direction de déplacement matérialisée par une flèche 12.

Pour la suite de la description, la direction longitudinale est parallèle à la direction de déplacement. Les notions d'avant et d'arrière font référence au sens de déplacement. Ainsi, l'Avant Av du dispositif correspond à la pointe de la flèche 12 et l'arrière Ar du dispositif à la queue de la flèche 12.

Un plan longitudinal est vertical et contient la direction longitudinale.

Un plan transversal correspond à un plan perpendiculaire à la direction longitudinale.

Une direction transversale correspond à une direction perpendiculaire au plan longitudinal. Par définition, un inter-rang est la zone située entre deux rangs d'arbres.

Le dispositif comprend un châssis porteur 14 mobile configuré pour se déplacer dans un inter-rang et d'un inter-rang à l'autre.

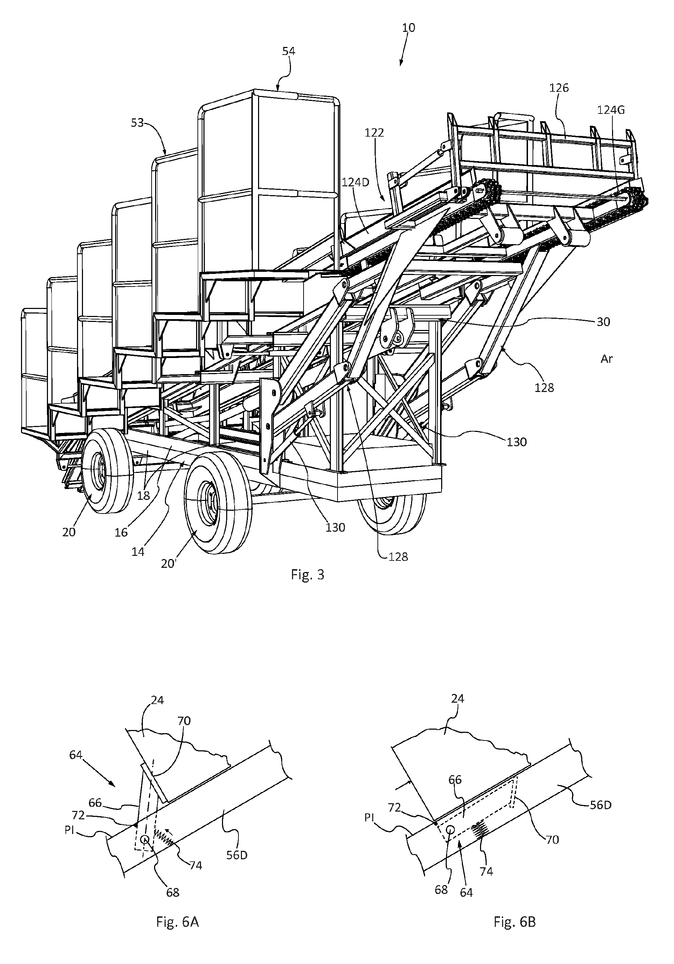

Selon un mode de réalisation, le châssis porteur 14 comprend deux longerons 18 parallèles à la direction longitudinale, un essieu avant 20 et un essieu arrière 20' qui supportent le cadre 16 (visible sur la figure 3).

Au moins un des essieux avant et/ou arrière est directeur pour permettre au dispositif de tourner. Selon une variante, le châssis porteur 14 comprend une motorisation pour lui permettre de se mouvoir de manière autonome. En variante, le châssis porteur 14 comprend un timon pour le tracter ou le pousser à l'aide d'un engin motorisé.

Le châssis porteur, les moyens pour le déplacer et pour le diriger ne sont pas plus décrits car ils sont connus de l'homme du métier et peuvent prendre différentes configurations.

Le dispositif comprend également une rampe 22 pour des conteneurs 24.

Selon un mode de réalisation, chaque conteneur se présente sous la forme d'un parallélépipède avec une face supérieure ouverte. Ces conteneurs ne sont pas plus décrits car ils sont de préférence identiques à ceux de l'art antérieur également appelés « pallocks ». A titre indicatif, lorsqu'ils sont remplis, ces conteneurs ont une masse supérieure à 100 Kg.

La rampe 22 comprend un plan incliné PI sur lequel les conteneurs 24 sont alignés, les fonds des conteneurs étant parallèles au plan incliné PI.

Le fait que les conteneurs soient inclinés permet de limiter les risques d'endommagement des fruits. Comme illustré sur la figure 1, chaque conteneur 24 comprend une paroi avant 26 et un fond 28. Lorsque les conteneurs sont disposés sur la rampe 22, la paroi avant 26 et le fond 28 forment un V. Cet agencement empêche les fruits au début du remplissage de rouler sur le fond 28. Les fruits sont déversés délicatement par les cueilleurs contre la paroi avant 26 et s'immobilisent au niveau de l'angle formé par le fond 28 et la paroi avant 26.

La rampe 22 est inclinée de telle manière que le plan incliné PI est proche du sol au niveau de l'avant Av du dispositif et distant du sol au niveau de l'arrière Ar.

Cet agencement permet de limiter les risques d'endommagement des fruits présents sur les arbres avant qu'ils ne soient cueillis. Ainsi, les fruits les plus bas sont cueillis en premier puis en fonction de l'avance les fruits de plus en plus hauts sont cueillis. Ainsi, les fruits sont cueillis avant qu'une partie constitutive du dispositif ne les touche.

Pour respecter le sens de la cueillette, il est important que les conteneurs 24 montent le plan incliné PI. Ainsi, ils sont remplis progressivement comme illustré sur la figure 1 et sont évacués remplis à l'arrière du dispositif.

Selon un mode de réalisation, la rampe 22 est supportée par un châssis secondaire 30 lui-même supporté par le châssis porteur 14.

Selon une première variante, le châssis secondaire 30 est fixe par rapport au châssis porteur 14. Dans ce cas, l'inclinaison du plan incliné PI n'est pas réglable.

En variante, le châssis secondaire 30 pourrait être mobile par rapport au châssis porteur 14 pour permettre le réglage de l'inclinaison du plan incliné PI comme illustré par la flèche 32 sur la figure 1 et pour adapter le dispositif à la hauteur des arbres.

Pour la suite de la description, on entend par châssis aussi bien le châssis porteur 14 que le châssis secondaire 30.

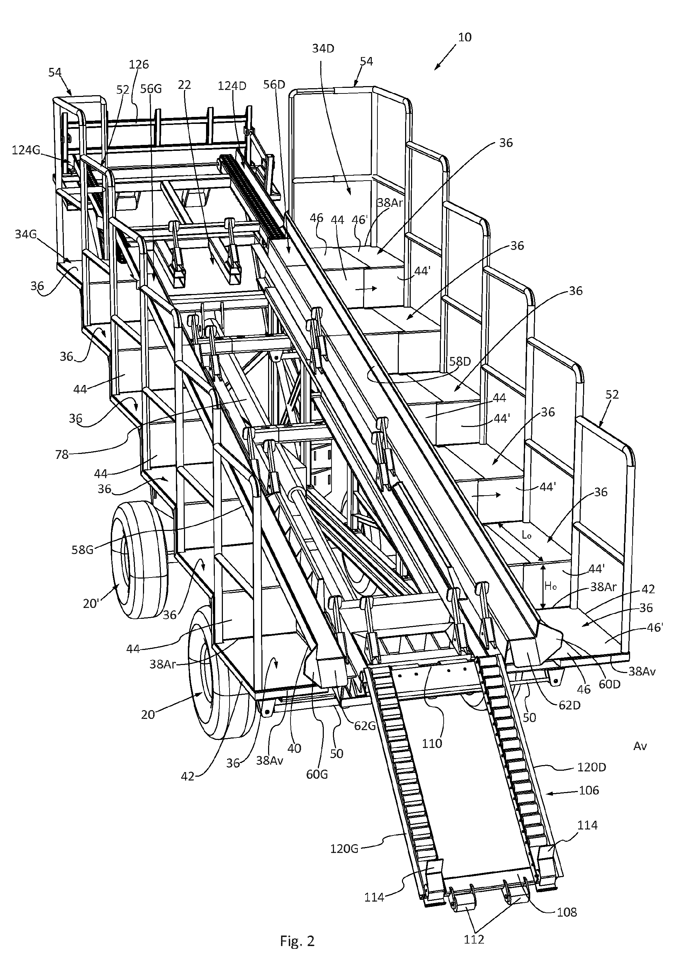

Selon une caractéristique de l'invention, le dispositif comprend de chaque côté de la rampe 22 une série de paliers, une première série de paliers droits 34D et une seconde série de paliers gauches 34G (visible sur la figure 2).

Chaque palier 36 forme une surface sensiblement rectangulaire avec deux bords, un premier côté avant 38Av et un deuxième côté arrière 38Ar parallèles et orientés selon la direction transversale. Chaque palier comprend un troisième côté 40 accolé à la rampe 22 et perpendiculaire aux côtés avant et arrière 38Av et 38Ar et un quatrième côté 42 appelé côté externe.

Selon l'invention, chaque palier a une longueur Lo (distance qui sépare le côté avant 38Av du côté arrière 38Ar) supérieure à 70 cm, et de préférence de l'ordre de 80 cm.

Pour chaque série, les paliers ont des surfaces parallèles entre elles et décalées en hauteur progressivement. Ainsi, pour un palier donné, le palier arrière adjacent est décalé vers le haut d'une hauteur H0 inférieure à 25 cm.

Compte tenu de la longueur importante de chaque palier (contrairement à une marche courte) et du faible décalage en hauteur d'un palier à l'autre, il n'est pas nécessaire de prévoir des garde-corps entre chaque palier. De la sorte, les cueilleurs peuvent se déplacer librement, en toute sécurité, d'un palier à l'autre pour chaque série de paliers. Ainsi, les paliers sont configurés pour permettre aux cueilleurs de se déplacer librement d'un palier à l'autre sans être entravés par un garde-corps.

Chaque série de paliers comprend des parois verticales 44, chacune d'elles étant intercalée entre deux paliers adjacents de manière à former une contremarche.

Avantageusement, chaque palier 36 comprend deux plaques 46, 46' superposées qui coulissent l'une par rapport à l'autre selon une direction transversale de manière à pouvoir régler la largeur de chaque palier. Ainsi, comme illustré sur la figure 2, chaque palier 36 est configuré pour occuper une position entre deux positions extrêmes, une première position rétractée pour les paliers de la série de paliers gauches 34G et une position déployée pour les paliers de la série de paliers droits 34D. En position rétractée, les plaques 46, 46' sont superposées l'une sur l'autre. En position déployée, la plaque 46' est décalée vers l'extérieur par rapport à la plaque 46.

Selon un premier mode de réalisation, chaque série de paliers comprend un premier ensemble de plaques 46 reliées par des contremarches 44, les plaques 46 et les contremarches étant disposées de manière alternée et un second ensemble formé de plaques 46' reliées par des contremarches 44', les plaques 46' et les contremarches 44' étant positionnées de manière alternée.

Le premier ensemble de plaques 46 est fixe et solidaire du châssis, le second ensemble de plaques 46' est disposé sur le premier ensemble de plaques 46 et peut coulisser vers l'extérieur en s'écartant de la rampe 22.

Des éléments de guidage 48 sont prévus pour guider et maintenir le second ensemble de plaques 46'. Selon un mode de réalisation, le second ensemble comprend au moins deux éléments de guidage en forme de L. Pour chacun d'eux, l'une des branches du L est verticale et reliée à une plaque 46', la seconde branche du L est disposée sous la plaque 46' et orientée selon la direction transversale, l'extrémité de la seconde branche coulissant dans un manchon solidaire du châssis.

Pour assurer un meilleur guidage, les éléments de guidage 48 sont les plus écartés possibles. Avantageusement, comme illustré sur la figure 1, le dispositif comprend trois éléments de guidage 48.

De préférence, au moins un actionneur 50 est prévu pour déplacer le second ensemble de plaques 46' entre la position rétractée et la position déployée. Selon un mode de réalisation, le dispositif comprend deux actionneurs 50 (par exemple des vérins), disposés parallèlement aux éléments de guidage 48 les plus écartés. A titre d'exemple, pour chaque élément de guidage, le corps du vérin est relié au manchon alors que la tige du vérin est reliée à la seconde branche du L.

Selon une autre variante, chaque palier 36 comprend une unique plaque 46 qui est reliée au bâti par une liaison permettant à la dite plaque 46 de se déplacer au moins en partie sous ou dans la rampe 22 en dessous du plan incliné PI. Ainsi, chaque plaque 46 peut se déplacer entre une position déployée et une position rétractée dans laquelle elle est disposée en partie sous ou dans la rampe 22 en dessous du plan incliné PI.

Par rapport à la variante précédente, cette configuration permet d'augmenter la course entre la position rétractée et la position déployée.

Selon un autre aspect, la liaison entre chaque plaque 46 et le bâti est telle qu'elle permet un léger pivotement des plaques 46 dans un plan horizontal afin de pouvoir régler le palier disposé à l'avant indépendamment du palier disposé à l'arrière.

Selon un mode de réalisation, de chaque côté de la rampe 22, le dispositif comprend un ensemble de paliers reliés entre eux, chaque palier comprenant une seule plaque. Chaque ensemble de paliers peut coulisser sous la rampe 22. A cet effet, le châssis comprend deux éléments de guidage, un à l'avant et un autre à l'arrière, chacun d'eux ayant une section carrée ou rectangulaire et étant orienté selon une direction perpendiculaire à un plan longitudinal. En complément, chaque ensemble de paliers comprend deux fourreaux, un pour chaque élément de guidage, chaque fourreau ayant une forme évasée à chaque extrémité et une section médiane réduite ajustée à la section de l'élément de guidage. Ces formes évasées sont adaptées pour permettre d'ajuster différemment la largeur des paliers entre l'avant et l'arrière. Pour assurer le mouvement de chaque ensemble de paliers, le dispositif comprend deux vérins, un à l'avant et un à l'arrière. Pour augmenter la largeur des paliers de la même manière à l'avant et à l'arrière, les courses des deux vérins sont identiques. Lorsqu'on souhaite élargir les paliers situés à l'avant de manière plus importante que ceux situés à l'arrière, le vérin avant a une course plus importante que le vérin situé à l'arrière. Les formes évasées des fourreaux permettent ce mouvement différent de l'avant et de l'arrière de l'ensemble des paliers.

Bien entendu, l'invention n'est pas limitée aux moyens décrits pour obtenir des paliers 36 avec une largeur variable afin d'adapter la largeur du dispositif à la largeur entre les rangs des arbres fruitiers.

Chaque série de paliers comprend au moins un garde-corps latéral 52 disposé à l'aplomb des côtés externes 42 des paliers 36. Dans le cas de paliers à largeur variable, le garde-corps 52 est solidarisé aux plaques 46' mobiles.

Avantageusement, pour chaque série de paliers, le palier disposé le plus à l'arrière comprend un garde-corps 54 placé à l'aplomb du côté arrière 38Ar. Dans le cas de paliers à largeur variable, le garde-corps 54 comprend un premier montant relié à la plaque 46 fixe et un second montant relié à la plaque 46' mobile, les deux montants étant reliés par au moins une barre horizontale coulissante lui permettant de s'adapter à la largeur variable des paliers 36.

En fonctionnement, lorsque des conteneurs 24 sont présents sur la rampe 22, ils assurent la fonction de garde-corps. Ainsi, lorsqu'ils sont sur les paliers 36, les cueilleurs sont en position sécurisée, leurs mouvements étant encadrés selon la direction transversale entre d'une part les conteneurs et le garde-corps 52. A l'arrière, pour le palier le plus haut, le garde-corps 54 empêche les chutes selon la direction longitudinale.

La rampe 22 comprend deux longerons 56G et 56D parallèles et orientés selon la direction longitudinale comprenant chacun des surfaces supérieures 56F coplanaires qui définissent le plan incliné PI sur lequel reposent et peuvent glisser les conteneurs 24.

Avantageusement, la rampe 22 comprend deux glissières 58D, 58G disposées de part et d'autre des longerons, permettant de guider les conteneurs 24 selon la direction longitudinale et limitant leurs déplacements selon une direction transversale.

De préférence, les glissières 58D, 58G comprennent aux extrémités orientées vers l'avant du dispositif des plans 60D, 60G non parallèles qui définissent un convergent pour favoriser l'introduction des conteneurs entre les glissières. En complément, le même agencement peut être prévu aux extrémités orientées vers l'arrière du dispositif.

En parallèle, les longerons 56G et 56D sont prolongés à l'avant par des surfaces d'appui 62G et 62D qui forment un angle avec le plan incliné PI favorisant l'introduction des conteneurs sur les surfaces supérieures 56F. En complément, le même agencement peut être prévu à l'arrière des longerons.

La rampe 22 comprend des moyens pour immobiliser les conteneurs 24 selon des positions stables P1, P2, P3 et des moyens pour déplacer selon une direction Di les conteneurs successivement d'une position à l'autre en remontant le plan incliné PI, en partant de l'avant du dispositif vers l'arrière du dispositif.

Selon un mode de réalisation, la rampe 22 comprend trois positions stables, une position stable PI à l'avant du dispositif, une position stable P2 en position intermédiaire et une position stable P3 à l'arrière du dispositif.

Pour chaque position, la rampe 22 comprend au moins un taquet rétractable 64.1, 64.2 et 64.3. Avantageusement, pour chaque position stable, la rampe comprend deux taquets rétractables, un premier taquet rétractable au niveau ou à proximité du longeron 56G et un second taquet rétractable au niveau ou à proximité du longeron 56D. Cette configuration assure une meilleure reprise des efforts.

Comme illustré sur les figures 6A et 6B, chaque taquet rétractable 64 est configuré pour occuper deux positions, une première position déployée visible sur la figure 6A dans laquelle le taquet rétractable 64 est en saillie par rapport au plan incliné PI de manière à maintenir un conteneur 24 et à empêcher tout mouvement du conteneur de l'arrière vers l'avant (en descendant le plan incliné PI) et une seconde position escamotée visible sur la figure 6B dans laquelle le taquet rétractable est en dessous du plan PI. Dans cette position escamotée, le taquet rétractable 64 ne retient plus le conteneur et permet le mouvement d'un conteneur 24 de l'avant vers l'arrière (en remontant le plan incliné PI).

Selon un mode de réalisation illustré de manière schématique, chaque taquet rétractable 64 comprend un levier 66 pivotant selon un axe de pivotement 68 par rapport au châssis, l'axe de pivotement 68 étant parallèle à la direction transversale de manière à permettre le pivotement du levier 66 dans un plan longitudinal. Le levier 66 comprend au niveau de son extrémité libre, écartée de l'axe de pivotement 68 une surface d'appui 70 contre laquelle vient en appui un conteneur 24 dans une position stable.

En complément, le taquet rétractable 64 comprend une butée 72 contre laquelle vient s'immobiliser le levier 66 lorsqu'il est en position déployée (figure 6A). Cette butée 72 limite le pivotement du levier 66 dans le sens antihoraire et le retient lorsqu'un conteneur vient s'immobiliser contre la surface d'appui 70 dudit levier. La butée 72 autorise le mouvement du levier de la position déployée vers la position escamotée.

Le taquet rétractable 64 comprend des moyens de rappel 74 qui tendent à exercer un effort sur le levier de manière à le faire pivoter dans le sens antihoraire afin de l'immobiliser contre la butée 72. Ces moyens de rappel 74 se présentent sous la forme d'un ressort de compression dont une première extrémité est reliée au châssis et dont une seconde extrémité est reliée au levier 66. Ces moyens de rappel 74 sont tarés de manière à permettre au taquet 64 de s'escamoter lorsqu'un conteneur 24 se déplace de l'avant du dispositif vers l'arrière en remontant le plan incliné PI.

Bien entendu, l'invention n'est pas limitée à cette conception pour les taquets rétractables.

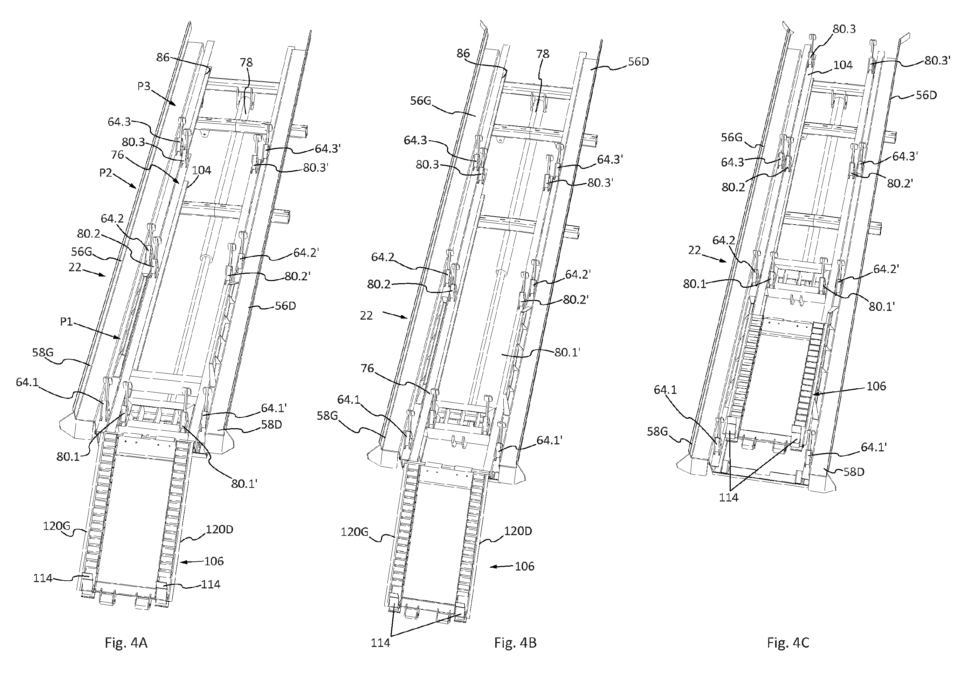

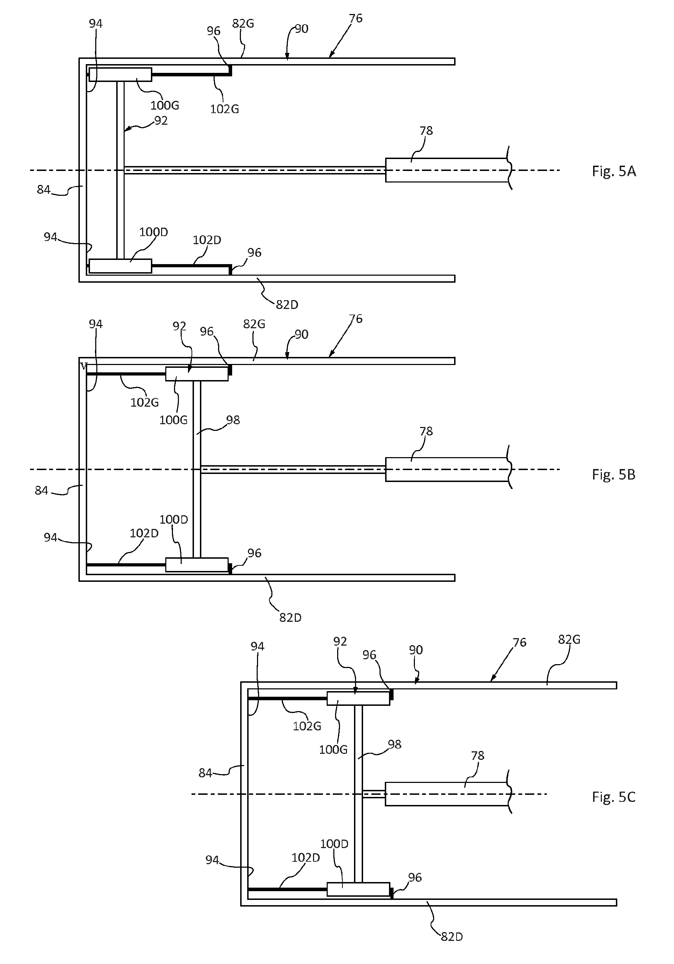

Comme illustré sur les figures 4A à 4C, 5A à 5C, les moyens pour déplacer les conteneurs comprennent un chariot 76 qui se translate entre les longerons 56G et 56D.

Ce chariot 76 est susceptible de se translater sous le plan incliné PI entre une position basse (visible sur les figures 4A et 5A) et une position haute (visible sur les figures 4C et 5C), la course entre les positions basse et haute étant configurée de manière à permettre le passage des conteneurs présents sur la rampe 22 d'une position stable à une position stable adjacente décalée vers le haut et l'arrière du dispositif. Le chariot 76 se translate selon la direction de mouvement des conteneurs Di.

Comme illustré sur les figures, le dispositif comprend un actionneur 78 pour assurer la translation du chariot 76 de la position basse à la position haute et inversement. Selon un mode de réalisation, l'actionneur 78 est un vérin dont le corps est relié au châssis et dont la tige est reliée au chariot 76.

Le chariot 76 comprend au moins un taquet rétractable 80 par conteneur à translater sur la rampe 22. De préférence, les taquets rétractables 80 sont identiques aux taquets rétractables 64 prévus au niveau de la rampe 22.

Ainsi, un taquet rétractable 80 est susceptible d'occuper une première position déployée dans laquelle il pousse un conteneur lorsque le chariot 76 se translate vers la position haute et une position escamotée dans laquelle il passe sous un conteneur lorsque le chariot 76 se translate vers la position basse.

Selon un mode de réalisation illustré sur les figures 4A à 4C, la rampe 22 comprend six taquets rétractables pour immobiliser les conteneurs dans les positions stables P1, P2, P3, deux taquets rétractables 64.1 et 64.1' dans le même plan transversal pour la position stable P1, deux taquets rétractables 64.2 et 64.2' dans le même plan transversal pour la position stable P2, deux taquets rétractables 64.3 et 64.3' dans le même plan transversal pour la position stable P3.

En complément, le chariot 76 comprend six taquets rétractables pour assurer la translation des conteneurs sur la rampe 22, deux taquets rétractables 80.1 et 80.1' dans le même plan transversal pour assurer le transfert d'un conteneur de la position stable P1 à la position stable P2, deux taquets rétractables 80.2 et 80.2' dans le même plan transversal pour assurer le transfert d'un conteneur de la position stable P2 à la position stable P3 et deux taquets rétractables 80.3 et 80.3' dans le même plan transversal pour assurer le transfert d'un conteneur de la position stable P3 vers une autre position stable ou la sortie de la rampe 22.

De préférence, les couples de taquets rétractables du chariot (80.1, 80.1'), (80.2, 80.2'), (80.3, 80.3') sont répartis selon la direction longitudinale de la même manière que les couples de taquets rétractables de la rampe 22 (64.1, 64.1'), (64.2, 64.2'), (64.3, 64.3').

Pour assurer la translation des conteneurs, la course du chariot 76 est déterminée de manière à ce que lorsque le chariot 76 est en position basse, les taquets rétractables 80.1 et 80.1' sont décalés vers l'avant par rapport aux taquets rétractables 64.1, 64.1', les taquets rétractables 80.2 et 80.2' sont décalés vers l'avant par rapport aux taquets rétractables 64.2 et 64.2' et les taquets rétractables 80.3 et 80.3' sont décalés vers l'avant par rapport aux taquets rétractables 64.3 et 64.3'. Cette configuration permet d'être sûr que les taquets rétractables 80.1, 80.1', 80.2, 80.2', 80.3, 80.3' implantés sur le chariot 76 reviennent en position déployée lorsque le chariot 76 atteint sa position basse.

La course du chariot 76 est déterminée de manière à ce que lorsque le chariot 76 est en position haute, les taquets rétractables 80.1 et 80.1' sont légèrement décalés vers l'arrière par rapport aux taquets rétractables 64.1, 64.1', les taquets rétractables 80.2 et 80.2' sont légèrement décalés vers l'arrière par rapport aux taquets rétractables 64.2 et 64.2' et les taquets rétractables 80.3 et 80.3' sont légèrement décalés vers l'arrière par rapport aux taquets rétractables 64.3 et 64.3'. Cette configuration permet d'être sûr que les taquets rétractables 64.1, 64.1', 64.2, 64.2', 64.3, 64.3' implantés sur la rampe 22 reviennent en position déployée lorsque le chariot 76 atteint la position haute.

L'invention n'est pas limitée au mode de réalisation décrit ci-dessus. Ainsi, la rampe 22 peut comprendre un seul taquet rétractable pour chaque position stable ou plus de deux taquets rétractables. De la même façon, chaque couple de taquets rétractables du chariot 76 peut être remplacé par un unique taquet rétractable ou plus de deux taquets rétractables.

Selon un mode de réalisation illustré sur les figures 5A à 5C, le chariot 76 comprend deux longerons droit 82D et gauche 82G reliés par une traverse 84 de manière à former un U, la traverse 84 reliant les extrémités des longerons 82D et 82G situées à l'avant du dispositif.

De préférence, le longeron droit 82D du chariot 76 coulisse le long du longeron droit 56D de la rampe 22 et le longeron gauche 82G du chariot 76 coulisse le long du longeron gauche 56G de la rampe 22.

A cet effet, selon un mode de réalisation visible sur la figure 4A, les longerons droit et gauche 56D et 56G de la rampe 22 comprennent chacun une rainure 86 dans laquelle peut coulisser un longeron du chariot 76, les rainures 86 des longerons 56D et 56G étant ouvertes l'une vers l'autre. A titre d'exemple, les longerons droit et gauche 56D et 56G de la rampe se présentent sous la forme chacun d'un profilé en C.

Selon un point important de l'invention, les positions stables P1, P2, P3 ne sont pas réparties de manière régulière selon la direction longitudinale afin d'obtenir au moins un passage 88 entre deux conteneurs, comme illustré sur 1. Ce passage 88 permet aux cueilleurs de passer d'un côté à l'autre de la rampe 22 sans avoir besoin de descendre du dispositif. Cette configuration permet d'améliorer la productivité dans la mesure où elle permet aux cueilleurs de se positionner en fonction de la densité des fruits à cueillir.

Afin que les conteneurs assurent la fonction de garde-corps en dehors du passage 88, les couples de taquets rétractables de la rampe sont répartis de manière à ce que les conteneurs soient espacés d'un faible écart E en dehors de la zone du passage 88. Ainsi, les couples de taquets rétractables de la rampe situés à l'avant des conteneurs faiblement espacés sont séparés d'une distance selon la direction longitudinale égale à la dimension selon la direction longitudinale du conteneur augmentée de l'écart E.

Pour les conteneurs séparés par le passage 88 de largeur P supérieure à l'écart E, les couples de taquets rétractables de la rampe situés à l'avant desdits conteneurs sont séparés d'une distance selon la direction longitudinale égale à la dimension selon la direction longitudinale du conteneur augmentée de la largeur P du passage.

Dans le cas d'un agencement des taquets rétractables avec un pas variable pour obtenir un passage, le chariot 76 comprend deux parties, un chariot principal 90 comprenant les longerons 82D et 82G et la traverse 84 et un chariot intermédiaire 92, le chariot principal 90 supportant les taquets rétractables disposés juste à l'avant des conteneurs faiblement espacés, le chariot intermédiaire 92 supportant les taquets rétractables disposés juste à l'avant du conteneur disposé à l'avant du passage 88.

Selon le mode de réalisation illustré sur les figures 1, 4A à 4C, le passage 88 est prévu entre les positions stables P1 et P2. Soit L la dimension des conteneurs selon la direction longitudinale, les taquets rétractables 64.1 (ou 64.1') et 64.2 (ou 64.2') sont espacés d'une distance égale à L+P et les taquets rétractables 64.2 (ou 64.2') et 64.3 (ou 64.3') sont espacés d'une distance égale à L+E inférieure à L+P.

Concernant le chariot 76, les taquets rétractables 80.1 et 80.1' sont supportés par le chariot intermédiaire 92 alors que les taquets rétractables 80.2, 80.2', 80.3 et 80.3' sont supportés par le chariot principal 90, les taquets rétractables 80.2 (80.2') et 80.3 (ou 80.3') étant espacés d'une distance égale à L+E.

Selon une caractéristique, le chariot intermédiaire 92 se déplace selon la direction Di indépendamment du chariot principal 90 sur une course déterminée permettant de compenser la différence entre les distances L+P et L+E.

Cette course est délimitée par deux butées de fin de course, une première butée de fin de course 94 située à l'avant et une deuxième butée de fin de course 96 située à l'arrière, qui sont solidaires du chariot principal 90.

Selon un mode de réalisation, le chariot intermédiaire 92 comprend une traverse 98 qui s'étend selon une direction transversale et qui est disposée entre les longerons 82D et 82G du chariot principal 90. Il comprend également à chaque extrémité de la traverse 98 des éléments de guidage 100D et 100G, chacun d'eux coulissant le long des longerons 82D ou 82G.

Selon un mode de réalisation visible sur les figures 4A à 4C et 5A à 5C, les éléments de guidage 100D, 100G comprennent des fourreaux pour coulisser respectivement sur des tiges 102D et 102G solidaires des longerons 82D et 82G. En complément, les longerons 82D et 82G comprennent chacun une rainure 104 dans laquelle sont logés les éléments de guidage et les tiges.

Chaque tige 102D et 102G comprend une première extrémité reliée à la traverse 84 et une seconde extrémité reliée par une butée de fin de course 96 aux longerons 82D ou 82G. Selon cette configuration, la traverse 84 assure la fonction de première butée de fin de course 94. La traverse 98 du chariot intermédiaire 92 est reliée à la tige de l'actionneur 78.

En position basse, comme illustré sur les figures 4A et 5A, la tige de l'actionneur 78 est en position sortie. La traverse 98 du chariot intermédiaire 92 est en butée contre la traverse 84 du chariot principal 90.

Pour assurer la translation des conteneurs vers l'arrière (en remontant le plan incliné PI), la tige de l'actionneur se translate vers sa position rentrée. Dans un premier temps, comme illustré sur les figures 4B et 5B, l'actionneur 78 entraine uniquement la traverse 98 du chariot intermédiaire 92 qui coulisse par rapport au chariot principal 90. Durant cette phase, seul le conteneur placé initialement dans la position stable P1 se translate vers l'arrière en remontant le plan incliné PI. Lorsque la traverse 98 du chariot intermédiaire 92 arrive contre la butée de fin de course 96 située à l'arrière, le déplacement de la tige de l'actionneur 78 vers la position rentrée entraine en translation les chariots principal et intermédiaire 90 et 92 qui se translatent alors vers la position haute comme illustré sur les figures 4C et 5C. Durant cette phase, tous les conteneurs se translatent pour changer de position stable en remontant le plan incliné PI. Au passage des conteneurs 24, les taquets rétractables 64.1, 64.1', 64.2, 64.2', 64.3, 64.3' implantés sur la rampe 22 passent en position escamotée. Lorsque les conteneurs ont atteint leurs nouvelles positions stables, les taquets rétractables 64.1, 64.1', 64.2, 64.2', 64.3, 64.3' implantés sur la rampe 22 reviennent en position déployée.

Pour le retour en position basse, la tige de l'actionneur 78 se translate vers la position sortie. Dans un premier temps, seul la traverse 98 du chariot intermédiaire 92 se translate vers l'avant en descendant le plan incliné PI. Dès que la traverse 98 arrive en butée contre la traverse 84, les deux chariots principal et intermédiaire 90 et 92 se translatent vers la position basse pour revenir dans la position telle qu'illustrée sur les figures 4A et 5A. Lors du passage sous les conteneurs 24, les taquets rétractables 80.1, 80.1', 80.2, 80.2', 80.3, 80.3' implantés sur les chariots passent dans la position escamotée. Lorsque les chariots atteignent la position basse, les taquets rétractables 80.1, 80.1', 80.2, 80.2', 80.3, 80.3' implantés sur les chariots reviennent en position déployée.

Avantageusement, le dispositif comprend une plateforme avant 106 disposée dans le prolongement de la rampe 22. Cette plateforme avant 106 a des dimensions adaptées pour supporter un uniquement conteneur. Elle comprend un bord avant 108 et un bord arrière 110 parallèles à la direction transversale. Le bord avant 108 comprend en partie inférieure des galets 112 qui roulent sur le sol et en partie supérieure une barrière 114 pour bloquer le conteneur et éviter qu'il ne bouge vers l'avant.

Avantageusement, la plateforme avant 106 est reliée au chariot 76. De préférence, le bord arrière 110 est relié à la traverse 84 du chariot 76 par une liaison pivotante 116 autorisant un mouvement de pivotement de la plateforme avant 106 par rapport au chariot 76 selon un axe de pivotement 118 parallèle à la direction transversale. Selon cette configuration, les bords droit et gauche 120D et 120G sont adaptés pour coulisser dans les rainures 86 des longerons droit et gauche 56D et 56G de la rampe.

La plateforme avant 106 peut se présenter sous la forme d'une simple plaque comme illustré sur les figures 4A à 4C ou sous la forme de deux rangées de rouleaux, comme illustré sur la figure 2. Avantageusement, un moyen de réglage de l'inclinaison de la plateforme avant 106 est prévu.

Selon les cas, la barrière 114 peut s'étendre sur toute la largeur de la plateforme comme illustré sur les figures 4A à 4C ou comprendre deux butées comme illustré sur la figure 2.

De plus, cette barrière 114 peut éventuellement s'escamoter vers l'arrière pour permettre l'introduction d'un conteneur depuis l'avant de la plateforme avant 106.

Ainsi, lorsque le chariot 76 est en position basse, la plateforme avant 106 est disposée à l'avant de la rampe 22. Généralement, comme illustré sur la figure 1, la plateforme avant 106 est plus inclinée que le plan incliné PI.

Lorsque le chariot 76 se translate vers l'arrière en remontant le plan incliné PI, la plateforme avant 106 se translate vers l'arrière. Ces bords droit et gauche 120D et 120G coulissent dans les rainures 86 des longerons droit et gauche 56D et 56G de la rampe. Lorsque le chariot 76 atteint la position haute, le conteneur supporté par la plateforme avant 106 est positionné dans la position stable P1. Lorsque la plateforme avant 106 se translate vers l'avant, le conteneur qui vient d'être introduit sur la rampe 22 est maintenu par les taquets rétractables 64.1, 64.1'.

Avantageusement, le dispositif comprend une plateforme arrière 122 disposée dans le prolongement de la rampe 22. Cette plateforme arrière 122 a des dimensions pour supporter un conteneur. Elle peut se présenter sous la forme d'une plaque ou de rangées de rouleaux comme illustré sur la figure 2. La plateforme arrière 122 comprend des rives droite et gauche 124D et 124G pour caler le conteneur selon une direction transversale et une barrière escamotable 126 pour limiter la translation du conteneur vers l'arrière.

Cette plateforme arrière 122 est reliée au châssis grâce à une liaison lui permettant d'occuper une position haute (en trait fort sur la figure 1) dans laquelle elle est disposée dans le prolongement du plan incliné PI et une position basse (en pointillés sur la figure 1) dans laquelle elle est disposée juste au-dessus du sol. Cette configuration permet d'évacuer les conteneurs de la rampe en les disposant au niveau du sol. A cet effet, le dispositif comprend deux parallélogrammes déformables 128 disposés de part et d'autre de la plateforme arrière 122 et qui la relient au châssis. Le dispositif comprend pour chaque parallélogramme déformable au moins un actionneur 130 pour maintenir la plateforme arrière 122 en position haute et pour contrôler la déformation du parallélogramme déformable correspondant pour faire descendre la plateforme jusqu'au sol.

Bien entendu, l'invention n'est pas limitée à cet agencement concernant l'articulation de la plateforme arrière 122 avec le châssis.

## Revendications

1. Dispositif pour la cueillette de fruits comprenant :
- un châssis (14) mobile selon une direction de déplacement,
- une rampe (22) supporté par le châssis (14) et qui comprend un plan incliné (PI) sur lequel des conteneurs (24) sont alignés selon la direction de déplacement,
- une série de paliers (34D) située d'un côté de ladite rampe (22) et une série de paliers (34G) située de l'autre côté de ladite rampe (22),
**caractérisé en ce que** le plan incliné (PI) est proche du sol à l'avant du dispositif et distant du sol à l'arrière du dispositif et **en ce que** la rampe (22) comprend des moyens pour immobiliser les conteneurs (24) selon des positions stables (P1 à P3) et des moyens pour déplacer les conteneurs (24) d'une position stable à l'autre en remontant le plan incliné (PI).

2. Dispositif selon la revendication 1, **caractérisé en ce que** les positions stables (P1 à P3) sont réparties de manière à obtenir au moins un passage (88) entre deux conteneurs pour passer d'un côté à l'autre de la rampe (22).

3. Dispositif selon la revendication 1 ou 2, **caractérisé en ce que** la rampe (22) comprend pour chaque position stable (P1 à P3) au moins un taquet rétractable (64.1, 64.2, 64.3) configuré pour occuper une première position déployée dans laquelle le taquet rétractable est en saillie par rapport au plan incliné (PI) de manière à maintenir un conteneur (24) et à empêcher tout mouvement descendant le plan incliné (PI) du conteneur (24) et une seconde position escamotée dans laquelle le taquet rétractable est en dessous du plan (PI) afin de permettre le mouvement d'un conteneur (24) remontant le plan incliné (PI).

4. Dispositif selon l'une des revendications précédentes, **caractérisé en ce que** la rampe (22) comprend un chariot (76) configuré pour se déplacer entre une position basse et une position haute avec une course adaptée pour permettre le passage des conteneurs présents sur la rampe (22) d'une position stable à une autre position stable adjacente décalée vers le haut.

5. Dispositif selon la revendication 4, **caractérisé en ce que** le chariot (76) comprend pour chaque conteneur à déplacer au moins un taquet rétractable (80) configuré pour occuper une position déployée dans laquelle il pousse un conteneur lorsque le chariot se translate vers la position haute et une position escamotée dans laquelle il passe sous un conteneur lorsque le chariot se translate vers la position basse.

6. Dispositif selon les revendications 2 et 5, **caractérisé en ce que** le chariot (76) comprend deux parties, un chariot principal (90) supportant les taquets rétractables disposés juste à l'avant de conteneurs faiblement espacés et un chariot secondaire (92) supportant les taquets rétractables disposés juste à l'avant du conteneur disposé à l'avant du passage (88), le chariot secondaire (92) étant mobile par rapport au chariot principal (90) selon une direction de mouvement des conteneurs.

7. Dispositif selon la revendication 6, **caractérisé en ce que** le chariot principal (90) comprend deux longerons (82D, 82G) et une traverse (84) reliant les extrémités orientées vers l'avant des longerons (82D, 82G), et **en ce que** le chariot secondaire (92) comprend une traverse (98) reliée à une tige d'un actionneur (78), la traverse (98) du chariot secondaire (92) étant mobile entre une première butée de fin de course (94) située à l'avant et une deuxième butée de fin de course (96) située à l'arrière, lesdites butées étant solidaires du chariot principal (90).

8. Dispositif selon l'une des revendications précédentes, **caractérisé en ce que** chaque palier (36) a une longueur selon la direction de déplacement supérieure à 70 cm.

9. Dispositif selon l'une des revendications précédentes, **caractérisé en ce que** les paliers (36) ont une largeur variable.

10. Dispositif selon l'une des revendications précédentes, **caractérisé en ce qu'**il comprend une plateforme avant (106) disposée dans le prolongement de la rampe (22).

11. Dispositif selon les revendications 4 et 10, **caractérisé en ce que** la plateforme avant (106) est reliée au chariot (76) par une liaison pivotante avec un axe de pivotement (118) perpendiculaire à la direction de déplacement.

12. Dispositif selon l'une des revendications précédentes, **caractérisé en ce qu'**il comprend une plateforme arrière (122) disposée dans le prolongement de la rampe (22).

13. Dispositif selon la revendication précédente, **caractérisé en ce que** la plateforme arrière (122) est reliée au châssis par une liaison lui permettant d'occuper une position haute dans le prolongement du plan incliné (PI) et une position basse juste au-dessus du sol.
